# EUROPÄISCHE PATENTANMELDUNG

(11) **EP 4 684 906 A1**
(43) Veröffentlichungstag der Anmeldung: **28.01.2026**
(21) Anmeldenummer: 25186312.2
(22) Anmeldetag: 30.06.2025
(51) Int. Cl.: B23K 26/55, B23K 26/70

(54) **VERFAHREN UND VORRICHTUNG ZUM BESTIMMEN VON LAGEPARAMETERN UND/ODER BEWEGUNGSPARAMETERN EINER FLEXIBLEN FLUIDLEITUNG**

(30) Priorität: 22.07.2024 DE 102024206867
(71) Anmelder: Carl Zeiss SMT GmbH, 73447 Oberkochen (DE)
(72) Erfinder: FAAS, Sebastian, 73447 Oberkochen (DE); SULEIMAN, Samer, 73447 Oberkochen (DE)
(74) Vertreter: Kohler Schmid Möbus Patentanwälte

(57) **Zusammenfassung**

Die Erfindung betrifft ein Verfahren zum Bestimmen mindestens eines Lageparameters (P) und/oder eines Bewegungsparameters einer flexiblen Fluidleitung (6), die in eine Hohlstruktur (2), insbesondere in eine Hohlstruktur (2) mit dreidimensionalem Verlauf, eingebracht ist, die bei der materialabtragenden Bearbeitung eines Werkstücks, bevorzugt eines Substrats (1) für ein optisches Element, insbesondere einen EUV-Spiegel, gebildet wird. Das Verfahren umfasst: Kontaktloses Erfassen mindestens einer an der flexiblen Fluidleitung (6), bevorzugt an einem Mantel (12) der flexiblen Fluidleitung (6), vorgesehenen Markierung (10), sowie Bestimmen des mindestens einen Lageparameters (P) und/oder Bewegungsparameters der flexiblen Fluidleitung (6) anhand der erfassten Markierung (10). Die Erfindung betrifft auch eine Vorrichtung zur Durchführung des Verfahrens.

## Beschreibung

### Bezugnahme auf verwandte Anmeldung

Diese Anmeldung beansprucht die Priorität der deutschen Patentanmeldung DE 102024206867.5 vom 22. Juli 2024, deren gesamter Offenbarungsgehalt durch Bezugnahme zum Inhalt dieser Anmeldung gemacht wird.

### Hintergrund der Erfindung

Die Erfindung betrifft ein Verfahren zum Bestimmen mindestens eines Lageparameters und/oder eines Bewegungsparameters einer flexiblen Fluidleitung, die in eine Hohlstruktur, insbesondere in eine Hohlstruktur mit einem dreidimensionalen Verlauf, eingebracht ist, die bei der materialabtragenden Bearbeitung eines Werkstücks, bevorzugt eines Substrats für ein optisches Element, insbesondere für einen EUV-Spiegel, gebildet wird. Die Erfindung betrifft auch eine Vorrichtung, die zur Durchführung des Verfahrens ausgebildet ist.

Die WO2023/0110816A2 beschreibt ein Verfahren zum Erzeugen einer Hohlstruktur in einem Werkstück in Form eines Substrats für einen Spiegel durch materialabtragende Bearbeitung mittels gepulster Laserstrahlung. Bei dem Verfahren wird eine Abtragsfront gebildet, die beim Erzeugen der Hohlstruktur innerhalb des Werkstücks bewegt und in Kontakt mit einem Fluid gebracht wird. Das Fluid wird dazu verwendet, die bei der materialabtragenden Bearbeitung entstehenden Ablationsprodukte durch einen permanenten Fluidstrom in ausreichender Anzahlkonzentration von der Abtragsfront abzutransportieren und um einen homogenen Abtrag zu gewährleisten. Bei der Bewegung der Abtragsfront in dem Werkstück wird das Fluid der Abtragsfront mittels einer Fluidzuführung nachgeführt, die zumindest teilweise in die Hohlstruktur eingeführt wird. Die Fluidzuführung kann eine flexible Fluidleitung aufweisen.

Bei der Zuführung des Fluids zu der Abtragsfront sollte ein der Abtragsfront zugewandtes Ende der Fluidleitung einen Abstand zu der Abtragsfront einhalten, der innerhalb eines prozessseitig definierten Toleranzbereichs liegt. Ist der Abstand des Endes der Fluidleitung zur Abtragsfront zu gering, trifft der Fluidstrom nicht auf die Mantelfläche der Hohlstruktur, sondern auf die in Bezug auf die Mantelfläche der Hohlstruktur unter einem Abtragsfront-Winkel ausgerichtete Abtragsfront und es erfolgt eine heterogene Spülung der Abtragsfront. Dies kann zu einer Beschädigung z.B. in Form einer Schwarzfärbung der Wände der Hohlstruktur führen. Für den Fall, dass der Abstand zwischen dem Ende der flexiblen Fluidleitung und der Abtragsfront zu groß ist, findet der Abtrag in "stehenden Gewässern" statt und es kann zu einer Rissbildung aufgrund einer zu hohen Partikelanzahlkonzentration bzw. von sedimentierten Ablationsprodukten kommen, die im schlimmsten Fall einen vollständigen Verlust des bearbeiteten Werkstücks zur Folge hat. Der prozessseitig definierte Abstand bzw. der Toleranzbereich hängt davon ab, wie viele Ablationsprodukte entstehen und wie viel Fluid, in der Regel in Form von Wasser, die flexible Fluidleitung zur Ablationsfront fördert. Der Abstand zwischen dem Ende der Fluidleitung und der Abtragsfront wird in Längsrichtung der Hohlstruktur bzw. der Mantelfläche des Hohlstruktur im Bereich der Abtragsfront gemessen, und zwar zu demjenigen Punkt bzw. zu diejenigen Kante der Abtragsfront, die in Längsrichtung am weitesten vom Ende der Fluidleitung entfernt ist.

Die Position des Endes der flexiblen Fluidleitung in der Hohlstruktur kann mit Hilfe einer Vorschubeinrichtung bzw. Fördereinheit eingestellt bzw. vorgegeben werden, welche die flexible Fluidleitung der Abtragsfront nachführt, genauer gesagt nachschiebt. Die Geschwindigkeit des Vorschubs kann mittels der Vorschubeinrichtung bestimmt werden. Aufgrund von Schlupf bei der Förderung bzw. dem Vorschub der flexiblen Fluidleitung und/oder aufgrund von ungewollten Bewegungen der flexiblen Fluidleitung innerhalb der Hohlstruktur kann sich die Position des Endes der flexiblen Fluidleitung zu kritischen Werten verschieben, die außerhalb des Toleranzbereichs liegen, ohne dass dies anhand des Vorschubs bzw. der Vorschubgeschwindigkeit der Vorschubeinrichtung festgestellt werden kann.

Es ist grundsätzlich möglich, ein Ende der flexiblen Fluidleitung, die zur Zuführung eines Fluids der Abtragsfront nachgeführt wird, mittels einer Kamera zu detektieren bzw. kontaktlos zu erfassen, wenn die flexible Fluidleitung in das Werkstück eingeführt ist. Zur Verbesserung der Detektion des Endes der flexiblen Fluidleitung kann eine Bestrahlung des Bearbeitungsortes bzw. der Abtragsfront, auf welche die gepulste Laserstrahlung eingestrahlt wird, um das Material des Werkstücks abzutragen, mit einer Lichtquelle, beispielsweise mit einer Lampe, erfolgen. Die Bestrahlung mittels der Lichtquelle kann aus unterschiedlichen Richtungen erfolgen, beispielsweise gegenläufig, senkrecht oder unter einem anderen Winkel in Bezug auf eine Ausbreitungsrichtung der für den Materialabtrag in das Werkstück eingestrahlten Laserstrahlung. Die Lichtquelle kann ausgebildet sein, farbiges Licht zu erzeugen, insbesondere rotes, grünes, blaues oder gelbes Licht. Es kann sich bei der Lichtquelle auch um eine Weißlichtquelle handeln. Zusätzlich zur Lichtquelle kann vor der Kamera noch ein Farbfilter verwendet werden. Es kann sich bei dem Farbfilter um einen Bandpass-Filter im sichtbaren Wellenlängenbereich oder um einen einfachen Farbfilter (z.B. rot/grün/blau/gelb) handeln.

### Aufgabe der Erfindung

Aufgabe der Erfindung ist es, ein Verfahren und eine Vorrichtung bereitzustellen, die eine möglichst robuste Bestimmung mindestens eines Lageparameters und/oder Bewegungsparameters der flexiblen Fluidleitung ermöglichen, die in die Hohlstruktur eingeführt ist.

### Gegenstand der Erfindung

Diese Aufgabe wird gelöst durch ein Verfahren der eingangs genannten Art, umfassend: Kontaktloses Erfassen mindestens einer an der flexiblen Fluidleitung, bevorzugt an einem Mantel der flexiblen Fluidleitung, vorgesehenen Markierung, sowie Bestimmen des mindestens einen Lageparameters und/oder Bewegungsparameters der flexiblen Fluidleitung anhand der erfassten Markierung.

Bei dem Verfahren wird mindestens eine Markierung kontaktlos erfasst, die an der flexiblen Fluidleitung vorgesehen ist. Die kontaktlose Erfassung der Markierung findet typischerweise außerhalb des Substrats statt bzw. ein für die kontaktlose Erfassung der Markierung vorgesehener Sensor ist außerhalb des Substrats positioniert. Auf diese Weise kann der mindestens eine Lageparameter und/oder Bewegungsparameter genauer bzw. robuster bestimmt werden als wenn dieser allein anhand des Vorschubs bzw. der Vorschubgeschwindigkeit der Vorschubeinrichtung bestimmt wird, welche die flexible Fluidleitung der Abtragsfront nachführt und außerhalb des Substrats angeordnet ist.

Das Vorsehen einer Markierung an der flexiblen Fluidleitung ist günstig, da diese, genauer gesagt der ringförmige Mantel der flexiblen Fluidleitung, in der Regel transparent ist, sodass diese innerhalb des Substrats abhängig von ihrer Position und vom Blickwinkel mittels eines ortsauflösenden optischen Detektors, beispielsweise einer Kamera, entweder gut oder eher schlecht erkennbar ist. Die Verwendung einer flexiblen Fluidleitung aus einem für die bei der materialabtragenden Bearbeitung verwendete Laserstrahlung transparenten Material hat sich als günstig erwiesen, um die Absorption von Streustrahlung möglichst zu vermeiden.

Grundsätzlich ist es möglich, den mindestens einen Lageparameter und/oder Bewegungsparameter zu bestimmen, wenn die flexible Fluidleitung bzw. das Ende der flexiblen Fluidleitung in die Hohlstruktur eingeführt wird, um in der Nähe einer Position positioniert zu werden, an der nachfolgend eine Abtragsfront gebildet wird. Insbesondere bei Hohlstrukturen mit einer komplexen Geometrie, die ggf. Verzweigungen aufweist, ist dies günstig. In diesem Fall wird der Lageparameter und/oder Bewegungsparameter bestimmt, bevor der Abtragsfront über die Fluidleitung ein Fluid zugeführt wird.

Bei einer Variante des Verfahrens wird bei der materialabtragenden Bearbeitung des Werkstücks eine Abtragsfront gebildet, der zur Zuführung eines Fluids ein Ende der flexiblen Fluidleitung nachgeführt wird. Bei dieser Variante wird der Lageparameter und/oder der Bewegungsparameter der flexiblen Fluidleitung bestimmt, während die flexible Fluidleitung bzw. deren Ende der Abtragsfront nachgeführt wird und über das Ende der flexiblen Fluidleitung der Abtragsfront ein Fluid, typischerweise Wasser, zugeführt wird. Wie weiter oben beschrieben wurde, ist es in diesem Fall für die Prozessführung wichtig, die Position des Endes und/oder den Abstand des Endes der flexiblen Fluidleitung zur Abtragsfront möglichst präzise zu kennen, um die Position bzw. den Abstand erforderlichenfalls anzupassen.

Bei einer Weiterbildung ist die Markierung zumindest im Bereich des Endes der flexiblen Fluidleitung vorgesehen und als Lageparameter wird eine Position des Endes der flexiblen Fluidleitung und/oder eine Orientierung der flexiblen Fluidleitung in dem Werkstück bestimmt. Im einfachsten Fall ist bei dieser Variante die Markierung nur im Bereich des Endes der flexiblen Fluidleitung vorgesehen und ermöglicht die Bestimmung der Position des Endes der flexiblen Fluidleitung, wenn diese mittels eines geeigneten Sensors erfasst wird.

Als Lageparameter kann auch die Orientierung der flexiblen Fluidleitung bzw. des Endes der flexiblen Fluidleitung in Bezug auf die Mantelfläche der Hohlstruktur, d.h. die Winkelstellung bzw. die Rotationskoordinate der Fluidleitung in Bezug auf den Querschnitt der Hohlstruktur, mittels eines geeigneten Sensors bestimmt werden. Dies ist insbesondere bei Fluidleitungen mit einem nicht kreisförmigen, z.B. elliptischen Querschnitt günstig, oder wenn der Verlauf einer dreidimensionalen Hohlstruktur anhand der Bewegungsbahn der flexiblen Fluidleitung ermittelt werden soll.

Die Erfassung der Markierung kann auf unterschiedliche Weise erfolgen. Die Markierung kann beispielsweise über einen optischen Sensor, z.B. eine Kamera, erfasst werden, die ein Bild des Substrats mit dem Ende der flexiblen Fluidleitung aufnimmt. Es ist aber auch möglich, die Markierung auf andere Weise als optisch zu erfassen, beispielsweise durch die Messung eines durch ein Magnetfeld induzierten elektrischen Spannung, z.B. mittels einer Hall-Sonde oder dergleichen (s.u.).

Bei einer weiteren Variante wird das materialabtragende Bearbeiten abgebrochen, wenn die Markierung nicht kontaktlos erfasst werden kann. Wenn die Markierung und somit die flexible Fluidleitung nicht detektiert werden kann, deutet dies darauf hin, dass ein Fehler bei der materialabtragenden Bearbeitung vorliegt. Es ist in diesem Fall günstig, die materialabtragende Bearbeitung abzubrechen, um nach der Ursache des Fehlers zu suchen.

Bei einer Variante ist die Markierung fluoreszierend ausgebildet und zur Bestimmung des mindestens einen Lageparameters und/oder Bewegungsparameters wird mindestens ein Fluoreszenzsignal der Markierung erfasst. Für die Erzeugung des Fluoreszenzsignals kann die Markierung mittels einer Lichtquelle, beispielsweise mittels einer UV-Lichtquelle, bestrahlt werden, es ist aber auch möglich, dass der im Umgebungslicht vorhandene UV-Strahlungsanteil ausreichend ist, um ein Fluoreszenzsignal zu erzeugen, das mittels eines geeigneten Sensors, ggf. in Kombination mit einem geeigneten Spektrometer, z.B. einem Spektrometer für die Plasmaspektroskopie, erfasst werden kann.

Bei einer Weiterbildung dieser Variante wird anhand einer Intensität des mindestens einen erfassten Fluoreszenzsignals als Lageparameter ein Abstand zwischen dem Ende der flexiblen Fluidleitung und der Abtragsfront erfasst. Es hat sich gezeigt, dass die Intensität des detektierten Fluoreszenzsignals mit dem Abstand des Endes der flexiblen Fluidleitung zur Abtragsfront in Verbindung gebracht werden kann. Um die Bestimmung des Abstands zu ermöglichen, sollte die Markierung zumindest im Bereich des Endes der Fluidleitung vorgesehen sein.

Bei einer weiteren Variante ist die Markierung an dem Mantel der flexiblen Fluidleitung, insbesondere im Bereich des Endes der flexiblen Fluidleitung, angebracht und bevorzugt als farbiges Markiermedium, insbesondere als fluoreszierendes Markiermedium, ausgebildet. In diesem Fall kann der Mantel beispielsweise mittels eines geeigneten farbigen Markiermediums, z.B. einer fluoreszierenden Flüssigkeit, eingefärbt werden. Hierbei besteht jedoch das Problem, dass ggf. die Wand der Hohlstruktur eingefärbt wird, wenn diese mit dem Markiermedium in Berührung kommt. Da die flexible Fluidleitung sich zudem permanent in dem Fluid, in der Regel in Form von Wasser, befindet, das der Abtragsfront zugeführt wird, diffundiert das Markiermedium relativ zügig in das umgebende Fluid und der Kontrast bei der Erfassung der Markierung nimmt mit fortschreitender Nutzung der flexiblen Fluidleitung ab.

Bei einer Weiterbildung dieser Variante weist der Mantel der flexiblen Fluidleitung mindestens eine Struktur, bevorzugt mindestens eine Nut, auf, in welche das Markiermedium eingebracht ist bzw. eindringen kann. Bei dieser Weiterbildung wird mindestens eine Struktur an dem Mantel der flexiblen Fluidleitung, insbesondere im Bereich des Endes der flexiblen Fluidleitung, angebracht, in die das Farbmedium eindringen kann, um mittels Kapillarkräften der Diffusion des farbigen Mediums entgegenzuwirken, wodurch die Markierung signifikant länger aufrechterhalten werden kann. Bei der bzw. den Struktur(en) kann es sich beispielsweise um feine Nuten handeln, in welche das in der Regel flüssige farbige Medium eindringen kann. Die Erfassung einer solchen Markierung kann über einen optischen Sensor, beispielsweise über eine Kamera, erfolgen, oder ggf. über einen nicht ortsauflösenden Sensor in Kombination mit einem Spektrometer. Im letzteren Fall kann es ggf. erforderlich sein, einen Messstrahl des Spektrometers bzw. des Sensors gezielt in Richtung auf die flexible Fluidleitung auszurichten, um den "Blick" des Spektrometers in Richtung der Markierung zu lenken. Zu diesem Zweck können ggf. in dem Spektrometer bzw. dem Sensor des Spektrometers vorhandene Spiegel, z.B. in Form von Galvanometer-Spiegeln, gezielt ausgerichtet bzw. ausgelenkt werden.

Für das Einbringen der Strukturen, beispielsweise in Form der Nuten, in die flexible Fluidleitung können unterschiedliche Verfahren bzw. Werkzeuge genutzt werden, beispielsweise Laser, insbesondere Ultrakurzpuls-Laser, (Rasier-)Klingen, Präzisionsschleifer ("Zahnarzt-Werkzeug"), etc. Die Anzahl, die Geometrie und das Herstellungsverfahren der Strukturen kann in Abhängigkeit von den Anforderungen geeignet gewählt werden. Die Verwendung einer solchen Markierung bzw. derartiger Strukturen kann grundsätzlich für beliebige Arten von flexiblen Fluidleitungen eingesetzt werden, unabhängig von deren Grundsubstrat und Farbgebung. Auch ist dieses Vorgehen für alle Markiermedien geeignet, die mit einem entsprechenden Sensor erfasst werden können.

Bei einer weiteren Variante sind als Markierung Partikel, bevorzugt Nanopartikel, insbesondere fluoreszierende Nanopartikel und/oder magnetische Nanopartikel, in den Mantel der flexiblen Fluidleitung eingebettet bzw. eingebracht. Die Einbettung bzw. die Einbringung stellt eine weitere Möglichkeit dar, um an der flexiblen Fluidleitung eine Markierung bzw. Markierungen anzubringen. Die Einbettung erfolgt typischerweise bei der Herstellung des Mantels der flexiblen Fluidleitung. Die (Nano-)Partikel weisen mindestens eine Eigenschaft auf, die kontaktlos erfasst werden kann: Bei den fluoreszierenden Nanopartikeln kann eine optische Erfassung erfolgen. Insbesondere kann in diesem Fall anhand der Intensität des Fluoreszenzsignals auf den Abstand des Endes der flexiblen Fluidleitung zur Abtragsfront geschlossen werden (s.o.). Bei den magnetischen Nanopartikeln kann eine Erfassung z.B. mittels einer bei der Bewegung der flexiblen Fluidleitung induzierten Spannung erfolgen, beispielsweise unter Verwendung eines Hall-Sensors. Der Artikel "Magnetic Nanoparticles: Synthesis, Protection, Functionalization, and Application", A.-H. Lu et al., Angewandte Chemie International Edition, 46: 1222-1244, gibt eine Übersicht über die Anwendung von magnetischen Nanopartikeln sowie über deren Herstellung.

Bei einer Weiterbildung enthält die Markierung unterschiedliche Arten von fluoreszierenden Nanopartikeln, deren Fluoreszenzsignale beim Erfassen voneinander unterschieden werden. Halbleiter-Nanopartikel, die mit einer geeigneten Lichtquelle, z.B. einer UV-Lichtquelle, angeregt werden, können Fluoreszenzlicht bei spezifischen Wellenlängen emittieren, welche über die Wahl der Größe bzw. des Materials der Nanopartikel einstellbar ist, vgl. beispielsweise den Artikel "Rational construction of a scalable heterostructured nanorod megalibrary", B. C. Steimle et al., Science 367, 418-424 (2020) oder den Artikel "A simple model for the ionization potential, electron affinity, and aqueous redox potentials of small semiconductor crystallites", L.E. Brus, J. Chem. Phys. 1 December 1983; 79 (11) 5566-5571. Die in den Mantel eingebrachten bzw. eingebetteten (Nano-)Partikel können in einer spezifischen bzw. frei wählbaren Zusammensetzung gemischt und bei der Herstellung in den Mantel der flexiblen Fluidleitung bzw. des Schlauchs zugegeben werden und auf diese Weise der flexiblen Fluidleitung ein charakteristisches Spektrum in der Art einer Codierung bzw. eines Fingerabdrucks verleihen. Dieses charakteristische Spektrum kann mit Hilfe einer geeigneten Spektroskopie, z.B. mittels Plasmaspektroskopie, gezielt erfasst bzw. detektiert werden.

Bei einer weiteren Variante variiert eine Verteilung und/oder eine Zusammensetzung der Partikel in Längsrichtung der flexiblen Fluidleitung periodisch und anhand der periodischen Variation wird als Bewegungsparameter eine Vorschubgeschwindigkeit flexiblen Fluidleitung in der Hohlstruktur bestimmt und bevorzugt mit einer durch eine Vorschubeinheit vorgegebenen Vorschubgeschwindigkeit verglichen. Werden die Nanopartikel mit einer gewünschten Zusammensetzung periodisch, d.h. mit einem vorgegebenen Abstand zwischen in Längsrichtung benachbarten Clustern von Nanopartikeln, in das Material des Mantels der flexiblen Fluidleitung eingebettet, kann bei bekannter bzw. vorgegebener Vorschubgeschwindigkeit der flexiblen Fluidleitung und bei geeigneter Platzierung eines Sensors die Markierung bzw. die Codierung der flexiblen Fluidleitung mit einer bestimmten Frequenz erfasst werden. Für den Fall, dass mindestens zwei in Längsrichtung benachbarte Cluster gleichzeitig vom Bildfeld des Sensors erfasst werden, kann bei bekannter Frequenz direkt die Vorschubgeschwindigkeit bestimmt werden. Diese Eigenschaft kann genutzt werden, um während der materialabtragenden Bearbeitung die Vorschubgeschwindigkeit der flexiblen Fluidleitung in dem Werkstück zu bestimmen. Auch kann durch eine Rückrechnung, d.h. durch das Zählen der Cluster bzw. der Anzahl der den Clustern entsprechenden "peaks", die bereits durch das Bildfeld des Sensors gelaufen sind, und eine Multiplikation mit dem Abstand benachbarter Cluster die Position der Spitze bzw. des Endes der flexiblen Fluidleitung in der Hohlstruktur bzw. die von der flexiblen Fluidleitung in der Hohlstruktur zurückgelegte Wegstrecke bestimmt werden (s.u.). Alternativ oder zusätzlich zu einer periodischen Variation der Verteilung der (Nano-)partikel in Längsrichtung der flexiblen Fluidleitung kann auch die Zusammensetzung, d.h. die Größenverteilung und/oder das Material der (Nano-)partikel periodisch variiert werden, um eine spezifische Wellenlänge des Fluoreszenzlichts mit einer definierten Frequenz zu versehen, die bei der Bewegung der flexiblen Fluidleitung innerhalb der Hohlstruktur detektiert werden kann.

Auch für den Fall, dass die Verteilung von magnetischen (Nano-)Partikeln in Längsrichtung der flexiblen Fluidleitung periodisch variiert, kann bei bekannter Frequenz der periodischen Verteilung die Vorschubgeschwindigkeit beispielsweise mit Hilfe eines Hall-Sensors erfasst werden. Auch auf diese Weise ist es möglich, die Vorschubgeschwindigkeit der flexiblen Fluidleitung direkt zu bestimmen, ohne zu diesem Zweck auf die Vorschubeinheit zurückzugreifen, welche die flexible Fluidleitung in die Hohlstruktur des Substrats fördert. Durch einen Vergleich zwischen der mittels der Markierung gemessenen Vorschubgeschwindigkeit mit der an der Vorschubeinheit eingestellten bzw. von dieser vorgegebenen Vorschubgeschwindigkeit kann festgestellt werden, ob bei der Förderung ein Schlupf aufgetreten ist.

Bei einer weiteren Variante kann anhand der vorgegebenen und/oder der bestimmten Vorschubgeschwindigkeit als Lageparameter eine von der flexiblen Fluidleitung in der Hohlstruktur zurückgelegte Wegstrecke bestimmt werden. Ist die Wegstrecke bekannt, die die flexible Fluidleitung in der Hohlstruktur zurückgelegt hat, kann indirekt auf die Position des Endes der Fluidleitung geschlossen werden, ohne die Position direkt zu bestimmen.

Es ist möglich, mit Hilfe der magnetischen Nanopartikel bei vorgegebener Vorschubgeschwindigkeit, die durch die Vorschubeinheit definiert ist, und bei bekannter Frequenz der periodischen Variation der Verteilung der magnetischen Nanopartikel mit Hilfe eines Hall-Sensors, der beispielsweise an der Öffnung positioniert ist, an der die flexible Fluidleitung in die Hohlstruktur eingeführt wird, die in die Hohlstruktur eingebrachte Strecke der flexiblen Fluidleitung bis zu deren der Abtragsfront zugewandtem Ende zu detektieren. Gleichzeitig kann mittels der fluoreszierenden Nanopartikel die vom Ende der flexiblen Fluidleitung zurückgelegte Strecke bzw. die Position des Endes der flexiblen Fluidleitung bestimmt werden. In Kombination mit der Intensität des Fluoreszenzsignals kann hierbei auch der Abstand des Endes der flexiblen Fluidleitung von der Abtragsfront bestimmt werden. Es ist auch möglich, Sensoren z.B. in Form von Spektrometern oder von Hall-Sensoren, an zwei unterschiedlichen Positionen zu platzieren. Beispielsweise kann in diesem Fall ein erster Sensor an bzw. in der Nähe der Soll-Position des freien Endes bzw. der Spitze der flexiblen Fluidleitung in der Nähe der Abtragsfront positioniert werden und ein zweiter Sensor kann am Eintritt in die Hohlstruktur positioniert werden, und zwar nach der Vorschubfördereinheit bzw. der Vorschubeinrichtung und vor dem ersten potentiellen "Widerstand" in der Hohlstruktur, z.B. einer Kurve oder dergleichen. Auf diese Weise stehen bezüglich der Vorschubgeschwindigkeit drei Informationsquellen an drei unterschiedlichen Positionen zur Verfügung: An der Position der Vorschubeinrichtung sowie an den Positionen der beiden Sensoren. Hierdurch kann beispielsweise ein Schlupf in der Vorschubeinrichtung detektiert werden, wenn die Vorschubrichtung arbeitet, aber an den beiden Positionen der Sensoren kein Fortschritt erkennbar ist. Für den Fall, dass es zu einem Verklemmen oder einem Abknicken der flexiblen Fluidleitung kommt, wird an der Position des zweiten Sensors am Eingang der Hohlstruktur eine Vorschubbewegung detektiert, während an der Position des ersten Sensors keine Vorschubbewegung detektiert wird. Bei einem ungestörten Betrieb sollten beide Sensoren dieselbe Vorschubgeschwindigkeit detektieren.

Die Codierung bzw. der Fingerabdruck kann auch durch die Verwendung von Partikeln mit anderen von einem Sensor erfassbaren Partikeleigenschaften erfolgen bzw. durch die Zugabe von entsprechenden Partikeln erweitert werden, bei denen es sich nicht zwingend um Nanopartikel handeln muss. Die Partikel können z.B. in Form von Schichten ausgebildet werden oder in Schichten enthalten sein. Beispielsweise ist es möglich, dem weiter oben beschriebenen flüssigen Markiermedium Partikel, insbesondere in Form von Nanopartikeln, zuzugeben. Wird ein solches Markiermedium z.B. in eine umlaufende Nut an dem Mantel der flexiblen Fluidleitung eingebracht, kann an der flexiblen Fluidleitung eine geschlossene Ringschicht erzeugt werden.

Ein weiterer Aspekt der Erfindung betrifft eine Vorrichtung der eingangs genannten Art, die ausgebildet ist, den mindestens einen Lageparameter und/oder Bewegungsparameter gemäß des weiter oben beschriebenen Verfahrens zu bestimmen. Für die kontaktlose Erfassung der mindestens einen Markierung weist die Vorrichtung mindestens einen Sensor auf. Eine Auswerteeinrichtung in Form einer geeigneten Hard- und/oder Software dient zur Bestimmung des mindestens einen Lageparameters und/oder Bewegungsparameters anhand der erfassten Markierung. Die Vorrichtung kann mindestens eine flexible Fluidleitung umfassen, an der mindestens eine Markierung vorgesehen ist. Die Markierung ist typischerweise an einem umlaufenden Mantel der flexiblen Fluidleitung vorgesehen.

Bei einer Ausführungsform ist die Vorrichtung ausgebildet, während des Bildens der Hohlstruktur den mindestens einen Lageparameter und/oder Bewegungsparameter mehrfach, insbesondere kontinuierlich, zu bestimmen und anhand des mindestens einen mehrfach bestimmten Lageparameters und/oder Bewegungsparameters einen insbesondere dreidimensionalen Verlauf der gebildeten Hohlstruktur zu ermitteln, sowie bevorzugt den ermittelten Verlauf der Hohlstruktur mit einem Soll-Verlauf der Hohlstruktur zu vergleichen.

Wird bei der Bildung der Hohlstruktur der mindestens eine Lageparameter und/oder Bewegungsparameter mehrfach, insbesondere kontinuierlich, bestimmt, kann über die Lage- bzw. Bewegungsabfolge eine dreidimensionale "Bewegungsspur" bzw. Bewegungsbahn der flexiblen Fluidleitung innerhalb des Werkstücks bestimmt werden. Neben der Position des Endes der flexiblen Fluidleitung kann auch die Orientierung des Endes der flexiblen Fluidleitung bestimmt werden, um ein dreidimensionales Abbild des Verlaufs der gebildeten Hohlstruktur zu erzeugen. Durch den Vergleich des dreidimensionalen Abbilds bzw. des ermittelten Verlaufs der Hohlstruktur mit einem Soll-Verlauf der Hohlstruktur kann eine Prozesskontrolle erfolgen. Für den Fall, dass bei dem Vergleich eine signifikante Abweichung von dem Soll-Verlauf der Hohlstruktur erkannt wird, kann ggf. in den Bearbeitungsprozess eingegriffen werden oder der Bearbeitungsprozess kann unterbrochen werden.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele sind in der schematischen Zeichnung dargestellt und werden in der nachfolgenden Beschreibung erläutert. Es zeigt
- Fig. 1a,b: schematische Darstellungen von Momentaufnahmen der materialabtragenden Bearbeitung eines Substrats für einen EUV-Spiegel, bei dem ein Ende einer flexiblen Fluidleitung, das eine Markierung aufweist, in zwei unterschiedlichen Abständen von einer Abtragsfront angeordnet ist,
- Fig. 2: eine schematische Darstellung eines Längsschnitts eines Mantels der flexiblen Fluidleitung, in den unterschiedlichen Arten von fluoreszierenden Nanopartikeln eingebettet sind,
- Fig. 3: eine schematische Darstellung analog zu Fig. 2 mit einer periodisch variierenden Verteilung der fluoreszierenden Nanopartikel, sowie
- Fig. 4: eine schematische Darstellung analog zu Fig. 3, bei der in den Mantel zusätzlich magnetische Nanopartikel eingebettet sind.

In der folgenden Beschreibung der Zeichnungen werden für gleiche bzw. funktionsgleiche Bauteile identische Bezugszeichen verwendet.

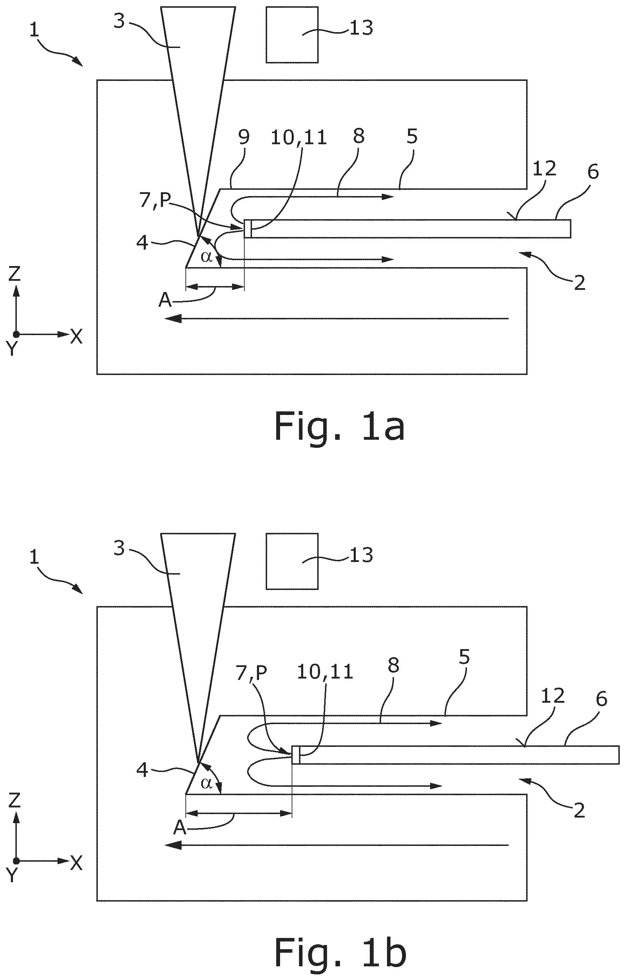

**Fig. 1a,b** zeigen ein Substrat 1 für einen EUV-Spiegel, das im gezeigten Beispiel aus titandotiertem Quarzglas gebildet ist. In Fig. 1a,b ist lediglich ein Ausschnitt des Substrats 1 mit einem horizontalen Abschnitts einer Hohlstruktur 2 in Form einer Temperier-Hohlstruktur zur Temperierung des Substrats 1 dargestellt, da nur dieser für die nachfolgenden Erläuterungen von Interesse ist. An dem Substrat 1 wird ein Verfahren zur materialabtragenden Bearbeitung durchgeführt, wie es in der eingangs zitierten WO2023/0110816A2 beschrieben ist, die durch Bezugnahme in ihrer Gesamtheit zum Inhalt dieser Anmeldung gemacht wird. Bei der materialabtragenden Bearbeitung wird das Material des Substrats 1 mit einem gepulsten Laserstrahl 3 bestrahlt, wobei eine Abtragsfront 4 gebildet wird, welcher die Hohlstruktur 2 in Längsrichtung begrenzt. Die Abtragsfront 4 ist als Ebene bzw. als ebene Fläche ausgebildet, die im gezeigten Beispiel, bei dem die Hohlstruktur 2 einen runden Querschnitt aufweist, eine elliptische Form aufweist und eine Grenzfläche zwischen der Hohlstruktur 2 und dem Material des Substrats 1 darstellt.

Quer zu ihrer Längsrichtung, die der X-Richtung eines XYZ-Koordinatensystems entspricht, wird die Hohlstruktur 2 durch eine Mantelfläche 5 begrenzt, die im gezeigten Beispiel eine zylindrische Form aufweist. Die Abtragsfront 4 schließt mit der Mantelfläche 5 einen Winkel α ein, der im Folgenden auch als Abtragsfront-Winkel bezeichnet wird. Der Abtragsfront-Winkel α beträgt im gezeigten Beispiel 45°, kann aber auch größere oder kleinere Werte aufweisen. Innerhalb der Hohlstruktur 2 ist eine flexible Fluidleitung 6 angeordnet, die im gezeigten Beispiel als Schlauch ausgebildet ist und die ein der Abtragsfront 4 benachbartes Ende 7 aufweist.

Die Herstellung der Hohlstruktur 2 erfolgt in einer durch einen Pfeil dargestellten Richtung, die in der Darstellung der Fig. 1a,b von rechts nach links verläuft. Durch die Einstrahlung der gepulsten Laserstrahlung 3 wird im Bereich der Abtragsfront 4 Material des Substrats 1 abgetragen. Das durch die gepulste Laserstrahlung 3 abgetragene Material wird mit Hilfe eines Fluids 8 weggespült, das mittels der flexiblen Fluidleitung 6 in den Bereich der Abtragsfront 4 zugeführt wird und das aus einer Öffnung an der Stirnseite des Endes 7 der flexiblen Fluidleitung 6 austritt. Bei dem Fluid 8 handelt es sich im gezeigten Beispiel um eine Flüssigkeit, genauer gesagt um Wasser. Als Fluid 8 kann aber auch eine andere Flüssigkeit oder ggf. ein Gas eingesetzt werden.

Wird das der Abtragsfront 4 zugewandte Ende 7 der flexiblen Fluidleitung 6 in einem zu geringen Abstand A von der Abtragsfront 4 angeordnet, wie dies in Fig. 1a der Fall ist, kann es zu einer Beschädigung 9 in Form einer Schwarzfärbung der Mantelfläche 5 der Hohlstruktur 2 kommen. Ist das der Abtragsfront 4 zugewandte Ende 7 der flexiblen Fluidleitung 6 in einem ausreichenden Abstand A von der Abtragsfront 4 angeordnet, wie dies in Fig. 1b der Fall ist, trifft der aus der Öffnung an der Stirnseite des Endes 7 der flexiblen Fluidleitung 6 austretende Fluidstrom auf die Mantelfläche 5 der Hohlstruktur und nicht auf die in Bezug auf die Mantelfläche 5 unter dem Abtragsfront-Winkel α ausgerichtete Abtragsfront 4. Ist der Abstand A zwischen dem Ende 7 der flexiblen Fluidleitung 6 und der Abtragsfront 4 zu groß, wird das abgetragene Material des Substrats 1 nicht in ausreichendem Maß abgeführt und es kann zur Rissbildung im Material des Substrats 1 kommen.

Um dies zu vermeiden, wird die flexible Fluidleitung 6, genauer gesagt das der Abtragsfront 4 zugewandte Ende 7, bei der materialabtragenden Bearbeitung der Abtragsfront 4 nachgeführt. Auf diese Weise soll der Abstand A in einem vorgegebenen Werteintervall gehalten werden, das in der Regel in der Größenordnung von mehreren Millimetern liegt. Um zu vermeiden, dass der Abstand A außerhalb des Toleranzbereichs liegt, ist es günstig, die Position P des Endes 7 der flexiblen Fluidleitung 6 als Lageparameter der flexiblen Fluidleitung 6 möglichst genau zu kennen bzw. diese möglichst robust zu bestimmen.

Zu diesem Zweck ist am Ende 7 der in Fig. 1a,b gezeigten flexiblen Fluidleitung 6 eine Markierung 10 in Form eines farbigen, genauer gesagt fluoreszierenden Markiermediums vorgesehen, das in eine ringförmig umlaufende Nut 11 an der Außenseite eines ringförmigen Mantels 12 der flexiblen Fluidleitung 6 eingebracht ist. Bei dem fluoreszierenden Markiermedium handelt es sich im gezeigten Beispiel um eine fluoreszierende Flüssigkeit, die durch Kapillarkräfte in der Nut 11 gehalten wird bzw. deren Diffusion in das umgebende Fluid 8 vermieden wird. Die Nut 11 ist zu diesem Zweck geeignet dimensioniert.

Das fluoreszierende Markiermedium am Ende 7 der flexiblen Fluidleitung 6 wird mit Hilfe eines Sensors in Form einer Kamera 13 erfasst. Anhand der Position des Markiermediums in dem von der Kamera 13 erfassten Bild kann mittels einer nicht bildlich dargestellten Auswerteeinrichtung die Position P des Endes 7 der flexiblen Fluidleitung 6 in dem Substrat 1 bestimmt werden. Es versteht sich, dass auch andere Tracking-Medien bzw. Markiermedien zu diesem Zweck verwendet werden können.

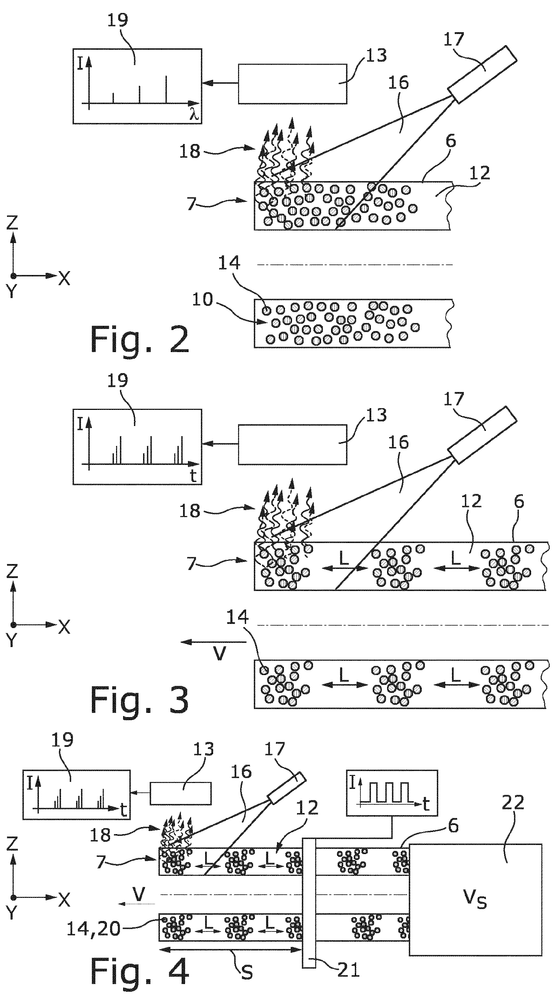

**Fig. 2** zeigt einen Längsschnitt durch den Mantel 12 des Endes 7 der flexiblen Fluidleitung 6, der eine Markierung 10 in Form von Nanopartikeln 14 aufweist, die in das Material des Mantels 12 der flexiblen Fluidleitung 6 eingebettet sind. Bei den Nanopartikeln 14 handelt es sich im gezeigten Beispiel um fluoreszierende Nanopartikel 14, die bei der Anregung mit Hilfe von UV-Licht 16, das von einer UV-Lichtquelle 17 ausgesandt wird, Fluoreszenzsignale 18 aussendet. Die Fluoreszenzsignale 18 werden von einem Sensor 13 erfasst, der Teil eines Spektrometers 19 ist. Die Nanopartikel 14 weisen eine hinsichtlich ihrer Größe und Materialbeschaffenheit vorgegebene Zusammensetzung auf, die der flexiblen Fluidleitung 6 ein charakteristisches Spektrum bzw. einen charakteristischen Fingerabdruck geben, der mit Hilfe einer geeigneten Spektroskopie, beispielsweise mittels Plasmaspektroskopie, gezielt erfasst werden kann.

In Fig. 2 sind beispielhaft drei Spektrallinien der erfassten Fluoreszenzsignale 18 dargestellt. Zur Erfassung der Fluoreszenzsignale 18 kann ein Messstrahl des Spektrometers 19 in Richtung des Endes 7 der flexiblen Fluidleitung 6 ausgerichtet werden. Mit Hilfe der erfassten Fluoreszenzsignale 18 kann die Position P des Endes 7 der flexiblen Fluidleitung 6 in dem Substrat 1 bestimmt werden. Zusätzlich ist es möglich, anhand der Intensität I der erfassten Fluoreszenzsignale 18 den Abstand A zwischen der Abtragsfront 4 und dem Ende 7 der flexiblen Fluidleitung 6 als Lageparameter zu bestimmen, da die Intensität I der erfassten Fluoreszenzsignale 18 vom Abstand A abhängig ist.

**Fig. 3** zeigt eine flexible Fluidleitung 6, bei der eine Verteilung der fluoreszierenden Nanopartikel 14 in Längsrichtung X der flexiblen Fluidleitung 6 periodisch variiert. Bei dem in Fig. 3 gezeigten Beispiel sind die Nanopartikel 14 in Clustern angeordnet, die in Längsrichtung X in jeweils gleichen Abständen L voneinander angeordnet sind. Werden die Fluoreszenzsignale 18 kontinuierlich gemessen, wird nur dann eine signifikante Intensität I erfasst, wenn das Spektrometer 19 bzw. der Sensor 13 die von einem jeweiligen Cluster von Nanopartikeln 14 emittierten Fluoreszenzsignale 18 aufnimmt. Die charakteristischen Spektren der Markierung 10 bzw. der flexiblen Fluidleitung 6 werden daher nur zu bestimmen Zeitpunkten erfasst, denen eine Frequenz zugeordnet werden kann. Ist der Abstand L zwischen den Clustern von Nanopartikeln 14 bekannt, kann aus dieser Frequenz auf die Vorschubgeschwindigkeit v der flexiblen Fluidleitung 6 als Bewegungsparameter der flexiblen Fluidleitung 6 geschlossen werden.

Alternativ ist es möglich, die Zusammensetzung der Nanopartikel 14 in Längsrichtung X der flexiblen Fluidleitung 6 periodisch zu variieren, um eine spezifische Wellenlänge mit einer definierten Frequenz zu versehen. Auch auf diese Weise kann die Vorschubgeschwindigkeit v der flexiblen Fluidleitung 6 bestimmt werden.

**Fig. 4** zeigt eine weitere Möglichkeit zur Bestimmung der Vorschubgeschwindigkeit v der flexiblen Fluidleitung 6, bei der zusätzlich zu den fluoreszierenden Nanopartikeln 14 magnetische Nanopartikel 20 in den Mantel 12 der flexiblen Fluidleitung 6 eingebracht bzw. eingebettet sind. Die magnetischen Nanopartikel 20 sind wie die fluoreszierenden Nanopartikel 14 in Clustern angeordnet, die in einem vorgegebenen Abstand L in Längsrichtung X der flexiblen Fluidleitung 6 angeordnet sind. Mit Hilfe eines Hall-Sensors 21 kann die bei der Bewegung der flexiblen Fluidleitung 6 induzierte Spannung erfasst und anhand des zeitlichen Abstands zwischen den beim Durchtritt der Cluster durch den Hall-Sensor 21 induzierten Spannungspulse kann die Vorschubgeschwindigkeit v der flexiblen Fluidleitung 6 bestimmt werden.

Die auf diese Weise bestimmte Vorschubgeschwindigkeit kann mit der Vorschubgeschwindigkeit v_{S} verglichen werden, die von einer Vorschubeinheit 22 vorgegeben bzw. eingestellt wird, welche den Vorschub der flexiblen Fluidleitung 6 bewirkt, um ggf. eine Abweichung festzustellen. Sowohl anhand der vorgegebenen Vorschubgeschwindigkeit v_{S} als auch anhand der auf die weiter oben beschriebene Weise bestimmten Vorschubgeschwindigkeit v kann als Lageparameter eine von der flexiblen Fluidleitung 6 in der Hohlstruktur 2 zurückgelegte Wegstrecke S bestimmt werden. Bei dem in Fig. 4 gezeigten Beispiel wird die Wegstrecke S ausgehend von der Position des Hall-Sensors 21 bestimmt, der unmittelbar vor der in Fig. 4 nicht bildlich dargestellten Öffnung an einer Seitenfläche des Substrats 1 positioniert ist, von welcher die Hohlstruktur 2 ausgeht. Es versteht sich, dass die von der flexiblen Fluidleitung 6 zu einem jeweiligen Zeitpunkt in dem Substrat 1 zurückgelegte Wegstrecke auch direkt anhand der Position P des Endes 7 der flexiblen Fluidleitung 6 bestimmt werden kann, wenn die Länge der Hohlstruktur 2 im Substrat 1 von der Öffnung zu dieser Position P bekannt ist. Bei der in Fig. 4 dargestellten Vorrichtung kann auf die weiter oben beschriebene Weise mit Hilfe der Fluoreszenzsignale 18 auch der Abstand A zwischen dem Ende 7 der flexiblen Fluidleitung 6 und der Abtragsfront 4 bestimmt werden.

Wird während des Bildens der Hohlstruktur 2 den mindestens eine Lageparameter P, A, S und/oder Bewegungsparameter v mehrfach, insbesondere kontinuierlich, bestimmt, kann anhand des mindestens einen mehrfach bestimmten Lageparameters P, A, S und/oder Bewegungsparameters v ein insbesondere dreidimensionaler Verlauf der gebildeten Hohlstruktur ermittelt bzw. rekonstruiert werden. Der ermittelte Verlauf der Hohlstruktur 2 kann mit einem Soll-Verlauf der Hohlstruktur 2 verglichen werden, um eine Prozesskontrolle zu realisieren.

## Patentansprüche

1. Verfahren zum Bestimmen mindestens eines Lageparameters (P, A, S) und/oder eines Bewegungsparameters (v) einer flexiblen Fluidleitung (6), die in eine Hohlstruktur (2), insbesondere in eine Hohlstruktur (2) mit dreidimensionalem Verlauf, eingebracht ist, die bei der materialabtragenden Bearbeitung eines Werkstücks, bevorzugt eines Substrats (1) für ein optisches Element, insbesondere einen EUV-Spiegel, gebildet wird, **gekennzeichnet durch**
Kontaktloses Erfassen mindestens einer an der flexiblen Fluidleitung (6), bevorzugt an einem Mantel (12) der flexiblen Fluidleitung (6), vorgesehenen Markierung (10), sowie
Bestimmen des mindestens einen Lageparameters (P, A, S) und/oder Bewegungsparameters (v) der flexiblen Fluidleitung (6) anhand der erfassten Markierung (10).

2. Verfahren nach Anspruch 1, bei dem bei der materialabtragenden Bearbeitung des Werkstücks eine Abtragsfront (4) gebildet wird, der zur Zuführung eines Fluids (8) ein Ende (7) der flexiblen Fluidleitung (6) nachgeführt wird.

3. Verfahren nach Anspruch 2, bei dem die Markierung (10) zumindest im Bereich des Endes (7) der flexiblen Fluidleitung (6) vorgesehen ist und bei dem als Lageparameter eine Position (P) des Endes (7) der flexiblen Fluidleitung (6) und/oder eine Orientierung der flexiblen Fluidleitung (6) in dem Werkstück bestimmt wird.

4. Verfahren nach einem der vorhergehenden Ansprüche, bei dem das materialabtragende Bearbeiten abgebrochen wird, wenn die Markierung (10) nicht kontaktlos erfasst werden kann.

5. Verfahren nach einem der vorhergehenden Ansprüche, bei dem die Markierung (10) fluoreszierend ausgebildet ist und bei dem zur Bestimmung des mindestens einen Lageparameters (P, A, S) und/oder Bewegungsparameters (v) mindestens ein Fluoreszenzsignal (18) der Markierung (10) erfasst wird.

6. Verfahren nach Anspruch 5, bei dem anhand einer Intensität (I) des mindestens einen erfassten Fluoreszenzsignals (18) als Lageparameter ein Abstand (A) zwischen dem Ende (7) der flexiblen Fluidleitung (6) und der Abtragsfront (4) erfasst wird.

7. Verfahren nach einem der vorhergehenden Ansprüche, bei dem die Markierung (10) an dem Mantel (12) der flexiblen Fluidleitung (6), insbesondere im Bereich des Endes (7) der flexiblen Fluidleitung (6), angebracht und bevorzugt als farbiges Markiermedium, insbesondere als fluoreszierendes Markiermedium, ausgebildet ist.

8. Verfahren nach Anspruch 7, bei dem der Mantel (12) der flexiblen Fluidleitung (6) mindestens eine Struktur, bevorzugt mindestens eine Nut (11), aufweist, in welche das Markiermedium eingebracht ist.

9. Verfahren nach einem der vorhergehenden Ansprüche, bei dem als Markierung (10) Partikel, bevorzugt Nanopartikel (14, 20), insbesondere fluoreszierende Nanopartikel (14) und/oder magnetische Nanopartikel (20), in den Mantel (12) der flexiblen Fluidleitung (6) eingebettet sind.

10. Verfahren nach Anspruch 9, bei dem die Markierung (10) unterschiedliche Arten von fluoreszierenden Nanopartikeln (14) enthält, deren Fluoreszenzsignale (18) beim Erfassen voneinander unterschieden werden.

11. Verfahren nach einem der Ansprüche 9 oder 10, bei dem eine Verteilung und/oder eine Zusammensetzung der Partikel (14, 20) in Längsrichtung (X) der flexiblen Fluidleitung (6) periodisch variiert und bei dem anhand der periodischen Variation als Bewegungsparameter eine Vorschubgeschwindigkeit (v) der flexiblen Fluidleitung (6) in der Hohlstruktur (2) bestimmt und bevorzugt mit einer durch eine Vorschubeinheit (22) vorgegebenen Vorschubgeschwindigkeit (vₛ) verglichen wird.

12. Verfahren nach Anspruch 11, bei dem anhand der vorgegebenen und/oder der bestimmten Vorschubgeschwindigkeit (vₛ, v) als Lageparameter eine von der flexiblen Fluidleitung (6) in der Hohlstruktur (2) zurückgelegte Wegstrecke (S) bestimmt wird.

13. Vorrichtung zum Bestimmen mindestens eines Lageparameters (P, A, S) und/oder eines Bewegungsparameters (v) einer flexiblen Fluidleitung (6), die in eine Hohlstruktur (2) eingebracht ist, die bei der materialabtragenden Bearbeitung eines Werkstücks, bevorzugt eines Substrats (1) für einen EUV-Spiegel, gebildet wird,
**dadurch gekennzeichnet,**
**dass** die Vorrichtung ausgebildet ist, den mindestens einen Lageparameter (P, A, S) und/oder Bewegungsparameter (v) gemäß des Verfahrens nach einem der vorhergehenden Ansprüche zu bestimmen.

14. Vorrichtung nach Anspruch 13, die ausgebildet ist, während des Bildens der Hohlstruktur (2) den mindestens einen Lageparameter (P, A, S) und/oder Bewegungsparameter (v) mehrfach, insbesondere kontinuierlich, zu bestimmen und anhand des mindestens einen mehrfach bestimmten Lageparameters (P, A, S) und/oder Bewegungsparameters (v) einen insbesondere dreidimensionalen Verlauf der gebildeten Hohlstruktur (2) zu ermitteln, sowie bevorzugt den ermittelten Verlauf der Hohlstruktur (2) mit einem Soll-Verlauf der Hohlstruktur (2) zu vergleichen.
